# EUROPEAN PATENT SPECIFICATION

(11) **EP 3 336 988 B1**
(45) Date of publication and mention of the grant of the patent: **27.01.2021**
(21) Application number: 16204472.1
(22) Date of filing: 15.12.2016
(51) Int. Cl.: H02G 3/32, F16L 3/12

(54) **CABLE SUPPORT**
KABELHALTER
SUPPORT DE CÂBLE

(43) Date of publication of application: 20.06.2018
(73) Proprietor: Caterpillar Motoren GmbH & Co. KG, 24159 Kiel (DE)
(72) Inventor: GREBIEN, Jan, 24113 Molfsee (DE); LAMP, Stefan, 24321 Giekau (DE); GRENZ, David, 24146 Kiel (DE)
(74) Representative: BRP Renaud & Partner mbB Rechtsanwälte Patentanwälte Steuerberater

(56) References cited:
- FR-A- 1 563 157
- US-A- 3 129 915
- US-A- 5 845 882
- US-A1- 2005 056 736

## Description

### Technical Field

This disclosure relates to supports for cables, harnesses and electrical wiring, in particular to supports for cables, harnesses and electrical wiring for power generation in marine applications.

### Background

Cable supports are generally used for supporting cables. The cable supports are generally attached to supporting structures such as beams, rods or supporting surfaces. Cable supports may be hooked shaped to retain the cable thereon. Cable supports may be adapted for specific applications in different technical areas. A cable support that is configured for a specific technical area may not satisfy the specific operational exigencies in other areas.

US5740994 discloses a cable support for high performance communications cables such as fibre optic cables. The cable support may be configured as a curved smooth saddle to support the cable in lay-in fashion. The saddle has a projecting stem with a number of fastening accommodations to receive clamps, clips or brackets, for positioning on or for suspension from a surface.

US5961081 discloses a cable support for cables and electrical wiring. The cable support comprises a J-shaped hook having a central cable supporting portion and first and second legs extending up from opposite ends of the central cable supporting portion. The cable support further comprises a retaining member movable from a cable receiving position to a cable retaining position.

US8616512 discloses a cable support for electrical wiring. The cable support has a body formed from a strap of self-supporting material, with a hook portion having a free end and an opposite attachment end. A stem is formed by the attachment end and includes an end segment movable relative to a main segment between a first, linearly-aligned position, and a second, normally-oriented position for facilitating selective mounting of the support on vertical and horizontal substrates.

Further relevant prior art is disclosed in US-A-2005/0056736, US-A-5 845 882, US-A-3 129 915 and FR-A-1 563 157.

The present disclosure is directed, at least in part, to improving or overcoming one or more aspects of the prior art system.

### Brief Summary of the Invention

The present disclosure describes a cable support as defined in claim 1. Preferred embodiments are defined in the dependent claims.

### Brief Description of the Drawings

The foregoing and other features and advantages of the present disclosure will be more fully understood from the following description of various embodiments, when read together with the accompanying drawings, in which:
Fig. 1 is an isometric view of a cable support according to the present disclosure;
Fig. 2 is a front view of a cable support according to the present disclosure; and
Fig. 3 is a side view of a cable support according to the present disclosure.

### Detailed Description

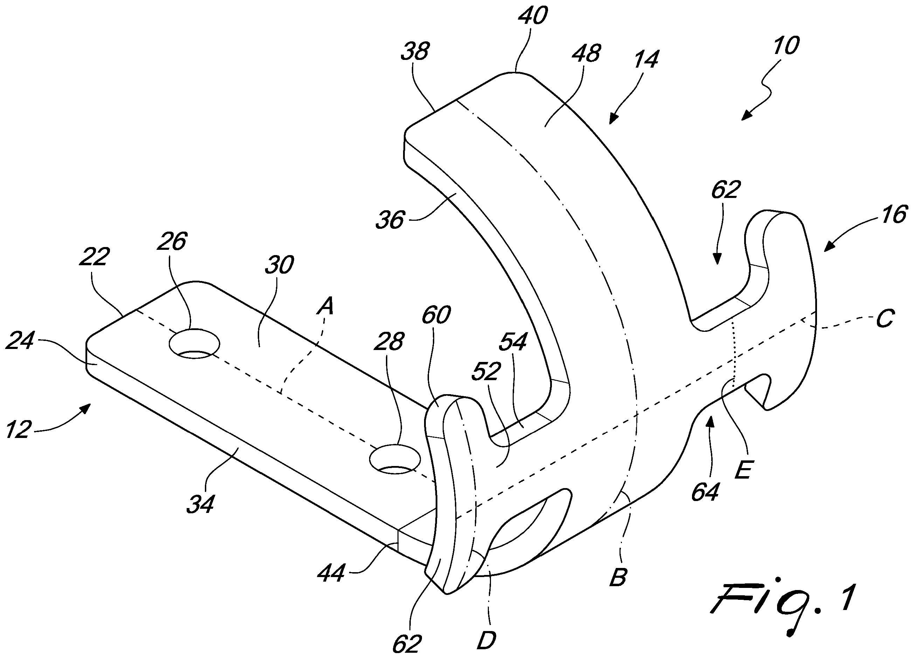

This disclosure generally relates to a cable support for supporting of cables and electrical wiring. Figs. 1 to 3, illustrates a cable support **10.** Cable support **10** may have a stem portion **12,** a hook portion **14** and at least one wing portion **16.** Cable support **10** may be formed from sheet metal, steel or other metallic material. Cable support **10** may be monolithic. In an embodiment, the stem portion **12,** the hook portion **14** and the at least one wing portion **16** may be integrally formed. In an alternative embodiment, the hook portion **14** and the at least one wing portion **16** may be separately formed and subsequently joined to form the cable support **10.**

The stem portion **12** may enable the cable support **10** to be fastened on a support surface. Stem portion **12** is substantially linear. Stem portion **12** may have a central axis **A.** Stem portion **12** may be flat and may be substantially rectangular in shape. Stem portion **12** may have a free stem end **22.** The free stem end **22** may have rounded corners **24.**

Stem portion may have a first hole **26** and a second hole **28.** First and second holes **26, 28** may extend through the stem portion **12.** First and second holes **26, 28** may be aligned relative to the central axis **A.** First and second holes **26, 28** may be positioned on the central axis **A.** First and second holes **26, 28** may be spaced apart. First hole **26** may be adjacent the free stem end **22.** Second hole **28** may be spaced from the free stem end **22.**

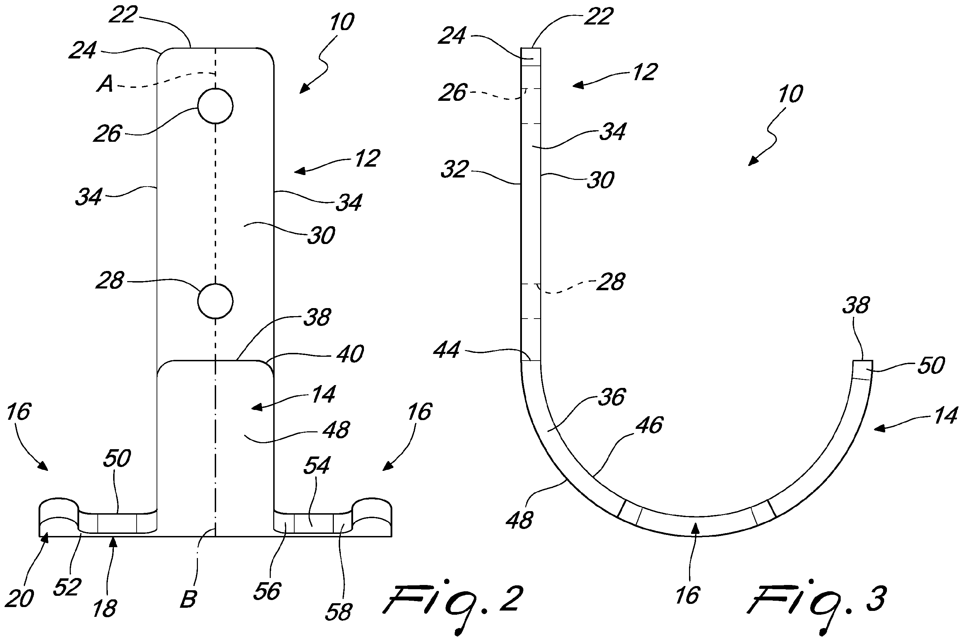

With reference to fig. 3, stem portion **12** may have a first stem surface **30** and a second stem surface **32.** First and second stem surfaces **30, 32** may be planar. In an embodiment, first stem surface **30** may be parallel to second stem surface **32.** First and second stem surfaces **30, 32** may be on opposite sides of the stem portion **12.** Each of first and second holes **26, 28** have respective openings on the first and second stem surfaces **30, 32.**

With reference to figs. 1 to 3, Stem portion **12** may have stem sides **34.** Stem sides **34** may be linear. Stem side edges **34** may be mutually parallel. Opposite sides of each stem side **34** may be joined to the first and second stem surfaces **30, 32.**

With reference to figs. 1 to 3, hook portion **14** may support the cable or electrical wiring on a support surface. The hook portion **14** may be connected to an end of the stem portion **12.** Hook portion **14** may be connected to the end of the stem portion **12** opposite the free stem end **22.** Hook portion **14** may be connected to the stem portion **12** at a transition point **44.** Hook portion **14** may have a free hook end **38.** The free hook end **38** may have rounded corners **40.**

Hook portion **14** may be contiguous with the stem portion **12.** Hook portion **14** may have a width that is substantially equal to the width of the stem portion **12.** Hook portion **14** may have a thickness that is substantially equal to the thickness of the stem portion **12.**

Hook portion **14** may be substantially curved. Hook portion **14** has a centre line **B.** Centre line **B** is aligned to the central axis **A** of the stem portion **12.** At the transition point **44,** centre line **B** may extend from the central axis **A** along a curved path. Centre line **B** may be a planar curve. Free hook end **38** may be disposed over the transition point **44.** At the free hook end **38,** part of centre line **B** may be aligned over part of centre line **B** at transition point **44.** In an embodiment, the hook portion **14** may have a form of a semi-circle.

With reference to fig. 3, hook portion **14** may have a first hook surface **46** and a second hook surface **48.** First and second hook surfaces **46, 48** may be curved. In an embodiment, first hook surface **46** may be concentric to second hook surface **48.** First and second hook surfaces **46, 48** may be on opposite sides of the hook portion **14.** First hook surface **46** may be contiguous with the first stem surface **30** of the stem portion **12.** Second hook surface **48** may be contiguous with the second stem surface **32** of the stem portion **12.**

With reference to figs. 2 and 3, hook portion **14** may have hook sides **36.** Hook sides **36** may be curved. Hook sides **36** may be mutually concentric with the first and second hook surfaces **46, 48.** Opposite sides of each hook side **36** may connect to first and second hook surfaces **46, 48.** Hook sides **36** of the hook portion **14** may be contiguous with the stem sides **34** of the stem portion **12.**

In an embodiment, hook portion **14** may have a coating to ensure a reduced friction between the cable support **10** and a cable. In a further embodiment, hook portion **14** may have holes for insertion of a cable-tie. In yet a further embodiment, the curvature of the hook portion **14** may be formed in steps. The hook portion **14** may be configured to have stepped portions.

With reference to figs, 1 to 3, the at least one wing portion **16** may extend laterally from the hook portion **14.** The wing portion **16** may extend laterally from the hook sides **36** of the hook portion **14.** Wing portion **16** may be contiguous with the hook portion **14.** Wing portion **16** may have a thickness that is substantially equal to the thickness of the hook portion **14.** The wing portion **16** may extend laterally from a mid-point of the hook portion **14.** The mid-point of the hook portion **14** may be a zone that is equidistant between the free hook end **38** and the connection of the hook portion **14** to the stem portion **12** at the transition point **44.**

With reference to fig. 1, wing portion **16** has a central axis **C.** Central axis **C** may be an axis of symmetry of the wing portion **16.** Central axis **C** may be substantially perpendicular to a tangent of the centre line **B** of the hook portion **14.** Central axis **C** may be substantially perpendicular to central axis **A** of the stem portion **12.**

With reference to fig. 2, wing portion **16** may have a first wing surface **50** and a second wing surface **52.** First and second wing surfaces **50, 52** may be curved. In an embodiment, first wing surface **50** may be concentric to second wing surface **52.** First and second wing surfaces **50, 52** may be on opposite sides of the wing portion **16.** First wing surface **50** may be contiguous with the first hook surface **46** of the hook portion **14.** First wing surface **50** may be level with the first hook surface **46** of the hook portion **14.** Second wing surface **52** of the wing portion **16** may be contiguous with the second hook surface **48** of the hook portion **14.**

Wing portion **16** may have wing sides **54.** Opposite sides of each wing sides **54** may be joined to the first and second wing surfaces **50, 52.** Wing sides **54** may be contiguous with the hook sides **36** of the hook portion **14.** Wing portion **16** may have a terminal end **42.** Terminal end **42** may connect opposed wing sides **54.**

In an embodiment, wing portion **16** may have a coating to ensure a reduced friction between the cable support **10** and a cable. In a further embodiment, wing portion **16** may have holes for insertion of a cable-tie.

With reference to figs, 1 and 2, the wing portion **16** has a neck **18** and a tab **20.** The tab **20** is connected to the hook portion **14** through the neck **18.** Neck **18** is elongated along the central axis **C.** Neck **18** may be strip-like body. Neck **18** may have a substantially rectangular shape. Wing sides **54** of the wing portion **16** may have curved corners **56** formed between the neck **18** and the hook portion **14.**

Tab **20** is elongated. Tab **20** is elongated along a direction perpendicular to central axis **C.** Tab **20** may have a centre line **D** that substantially follows the direction of elongation of tab **20.** Wing sides **54** of the tab **20** may have rounded free ends **60.** Wing sides **54** may have curved corners **58** formed between the neck **18** and the tab **20.**

The transverse dimension of the tab **20** may be greater than the transverse dimension of the neck **18.** Transverse dimension of the tab **20** may be measured in the direction that is substantially aligned to the centre line **D.** Preferably, the transverse dimension of tab **20** may be the cross sectional distance as defined by centre line **D.** Transverse dimension of the neck **18** may be measured in the direction that is substantially perpendicular to the central axis **C.** Preferably, the transverse dimension of tab **20** may be the cross sectional distance as defined by a centre line **E.**

Free ends **60** of the tab **20** may be laterally spaced from the neck **18.** Wing portion **16** may have a substantially T-shaped configuration. Wing portion **16** may have a first and a second cut-out **62, 64** formed between the free ends **60** of the tab **20** and hook sides **36.**

In an embodiment, the tab **20** may be substantially curved. Tab **20** may be formed as an arc. Center line **D** may be a planar curve. Curvature of the tab **20** may be substantially equal to the curvature of the the hook portion **14.** Center line **D** may be concentric with the center line **B** of the hook portion **14.**

In an embodiment, the neck **18** may be substantially curved. Neck **18** may have an arc shaped cross section. The cross sectional center line **E** may intersect the central axis **C.** Center line **E** may be a planar curve. Curvature of the neck **18** may be substantially equal to the curvature of the hook portion **14.** Curvature of the neck **18** may be substantially equal to the curvature of the tab **20.** Center line **E** may be concentric with the center line **B** of the hook portion **14.** Center line **E** may be concentric with the center line **D** of the tab **20.** Curvature of the first wing surface **50** may be substantially equal to the curvature of the first hook surface **46.**

In an embodiment, the cable support may have at least two wing portions **16** extending laterally from opposite hook sides **36.** The wing portions **16** may extend laterally from mid-point of each side **36** of the hook sides **36.** The respective neck **18** of each wing portion **16** may be mutually aligned. The central axis **C** of each neck **18** may be aligned. The respective tab **20** of each wing portion **16** may be mutually aligned. The centre line **D** of each tab **20** may be parallel.

The skilled person would appreciate that foregoing embodiments may be modified or combined to obtain the cable support **10** of the present disclosure.

### Industrial Applicability

This disclosure describes a cable support **10** for retaining cables, electrical wiring and harnesses for marine power generation engines. The cable support **10** has a stem portion **12** for attachment to a suitable wall or a support surface. The cable support **10** has a hook portion **14** for supporting a cable. The cable support **10** has at least one wing portion **16** for supporting and fastening the cable, electrical wiring and harness to the cable support **10.** The wing portion **16** may have a first and second cut-out **62, 64** that enables the cable, electrical wiring or harnesses to be secured by a fastener to the wing portion **16.** The fastener may be a plastic-tie.

Accordingly, this disclosure includes all modifications of the subject matter recited in the claims appended hereto as permitted by applicable law.

Where technical features mentioned in any claim are followed by reference signs, the reference signs have been included for the sole purpose of increasing the intelligibility of the claims and accordingly, neither the reference signs nor their absence have any limiting effect on the technical features as described above or on the scope of any claim elements.

One skilled in the art will realise the disclosure may be embodied in other specific forms without departing from the disclosure or essential characteristics thereof. The foregoing embodiments are therefore to be considered in all respects illustrative rather than limiting of the disclosure described herein. Scope of the invention is thus indicated by the appended claims, rather than the foregoing description, and all changes that come within the meaning of the claims are therefore intended to be embraced therein.

## Claims

1. A cable support (10) comprising:
a stem portion (12) having a central axis (A);
a hook portion (14) connected to an end of the stem portion (12) wherein the hook portion (14) has a centre line (B) aligned to the central axis (A) of the stem portion (12); and
at least one wing portion (16) extending laterally from the hook portion (14),
**characterized in that** the at least one wing portion (16) has a neck (18) and a tab (20) wherein the tab (20) is connected to the hook portion (14) through the neck (18) and wherein the wing portion (16) has a central axis (C), the neck (18) being elongated along the central axis (C) and the tab (20) being elongated along a direction perpendicular to the central axis (C).

2. The cable support (10) of claim 1 wherein the transverse dimension of the tab (20) is greater than the transverse dimension of the neck (18).

3. The cable support (10) of claims 1 or 2 wherein the at least one wing portion (16) extends laterally from a mid-point of the hook portion (14).

4. The cable support (10) of any one of preceding claims wherein the tab (20) is substantially curved.

5. The cable support (10) of claim 4 wherein the curvature of the tab (20) is substantially equal to a curvature of the the hook portion (14).

6. The cable support (10) of any one of preceding claims wherein the neck (18) is substantially curved.

7. The cable support (10) of claim 6 wherein the curvature of the neck (18) is substantially equal to a curvature of the the hook portion (14).

8. The cable support (10) of any one of preceding claims wherein the hook portion (14) is configured to have a form of a semi-circle.

9. The cable support (10) of any one of preceding claims wherein a curvature of the hook portion (14) is formed in steps.

10. The cable support (10) of any one of preceding claims having at least two wing portions (16) extending laterally from opposite hook sides (36) of the hook portion (14).

## Patentansprüche

1. Kabelhalter (10), umfassend:
einen Schaftabschnitt (12) mit einer Mittelachse (A);
einen Hakenabschnitt (14), der mit einem Ende des Schaftabschnitts (12) verbunden ist, wobei der Hakenabschnitt (14) eine Mittellinie (B) aufweist, die mit der Mittelachse (A) des Schaftabschnitts (12) ausgerichtet ist; und
mindestens einen Flügelabschnitt (16), der sich seitlich von dem Hakenabschnitt (14) erstreckt,
**dadurch gekennzeichnet, dass** der mindestens eine Flügelabschnitt (16) einen Hals (18) und eine Lasche (20) aufweist, wobei die Lasche (20) durch den Hals (18) mit dem Hakenabschnitt (14) verbunden ist und wobei der Flügelabschnitt (16) eine Mittelachse (C) aufweist, wobei der Hals (18) entlang der Mittelachse (C) verlängert ist und die Lasche (20) entlang einer Richtung senkrecht zu der Mittelachse (C) verlängert ist.

2. Kabelhalter (10) nach Anspruch 1, wobei die Querabmessung der Lasche (20) größer ist als die Querabmessung des Halses (18).

3. Kabelhalter (10) nach Anspruch 1 oder 2, wobei sich der mindestens eine Flügelabschnitt (16) seitlich von einem Mittelpunkt des Hakenabschnitts (14) erstreckt.

4. Kabelhalter (10) nach einem der vorstehenden Ansprüche, wobei die Lasche (20) im Wesentlichen gekrümmt ist.

5. Kabelhalter (10) nach Anspruch 4, wobei die Krümmung der Lasche (20) im Wesentlichen gleich einer Krümmung des Hakenabschnitts (14) ist.

6. Kabelhalter (10) nach einem der vorstehenden Ansprüche, wobei der Hals (18) im Wesentlichen gekrümmt ist.

7. Kabelhalter (10) nach Anspruch 6, wobei die Krümmung des Halses (18) im Wesentlichen gleich einer Krümmung des Hakenabschnitts (14) ist.

8. Kabelhalter (10) nach einem der vorstehenden Ansprüche, wobei der Hakenabschnitt (14) so konfiguriert ist, dass er die Form eines Halbkreises aufweist.

9. Kabelhalter (10) nach einem der vorstehenden Ansprüche, wobei eine Krümmung des Hakenabschnitts (14) in Stufen ausgebildet ist.

10. Kabelhalter (10) nach einem der vorstehenden Ansprüche, der mindestens zwei Flügelabschnitte (16) aufweist, die sich seitlich von gegenüberliegenden Hakenseiten (36) des Hakenabschnitts (14) erstrecken.

## Revendications

1. Support de câble (10) comprenant :
une partie pied (12) ayant un axe central (A) ;
une partie crochet (14) connectée à une extrémité de la partie pied (12) dans lequel la partie crochet (14) a une ligne centrale (B) alignée sur l'axe central (A) de la partie pied (12) ; et
au moins une partie ailette (16) s'étendant latéralement à partir de la partie crochet (14),
**caractérisé en ce que** l'au moins une partie ailette (16) a un col (18) et une languette (20) dans lequel la languette (20) est connectée à la partie crochet (14) par l'intermédiaire du col (18) et dans lequel la partie ailette (16) a un axe central (C), le col (18) étant allongé le long de l'axe central (C) et la languette (20) étant allongée le long d'une direction perpendiculaire à l'axe central (C).

2. Support de câble (10) selon la revendication 1 dans lequel la dimension transversale de la languette (20) est plus grande que la dimension transversale du col (18).

3. Support de câble (10) selon les revendications 1 ou 2 dans lequel l'au moins une partie ailette (16) s'étend latéralement à partir d'un point médian de la partie crochet (14).

4. Support de câble (10) selon l'une quelconque des revendications précédentes dans lequel la languette (20) est essentiellement courbée.

5. Support de câble (10) selon la revendication 4 dans lequel la courbure de la languette (20) est essentiellement égale à une courbure de la partie crochet (14).

6. Support de câble (10) selon l'une quelconque des revendications précédentes dans lequel le col (18) est essentiellement courbé.

7. Support de câble (10) selon la revendication 6 dans lequel la courbure du col (18) est essentiellement égale à une courbure de la partie crochet (14).

8. Support de câble (10) selon l'une quelconque des revendications précédentes dans lequel la partie crochet (14) est configurée pour avoir une forme d'un demi-cercle.

9. Support de câble (10) selon l'une quelconque des revendications précédentes dans lequel une courbure de la partie crochet (14) est formée en étapes.

10. Support de câble (10) selon l'une quelconque des revendications précédentes ayant au moins deux parties ailettes (16) s'étendant latéralement à partir de côtés crochets opposés (36) de la partie crochet (14).
